# EUROPEAN PATENT SPECIFICATION

(11) **EP 2 621 649 B1**
(45) Date of publication and mention of the grant of the patent: **26.05.2021**
(21) Application number: 11725906.9
(22) Date of filing: 08.06.2011
(51) Int. Cl.: B22D 19/00, F27D 1/12, F28D 1/047, F28F 3/12

(54) **HEAT EXCHANGER WITH DIE-CAST ELEMENTS AND METHOD FOR MANUFACTURING THE SAME**
WÄRMETAUSCHER MIT DRUCKGUSSELEMENTEN UND HERSTELLUNGSVERFAHREN DAFÜR
ÉCHANGEUR THERMIQUE AVEC ÉLÉMENTS MOULÉS SOUS PRESSION ET PROCÉDÉ DE FABRICATION DE CELUI-CI

(30) Priority: 01.10.2010 IT MI20101804
(43) Date of publication of application: 07.08.2013
(73) Proprietor: Unical AG S.p.A., 46033 Castel D'ario (IT)
(72) Inventor: MORINI, Mario, I-27043 Broni (IT)
(74) Representative: Modiano, Micaela Nadia
(86) International application number: PCT/EP2011/059470
(87) International publication number: WO 2012/041542

(56) References cited:
- DE-C- 726 599
- GB-A- 1 386 645
- GB-A- 2 047 587
- US-A1- 2007 017 658

## Description

The present invention relates to a method for manufacturing a heat exchanger with die-cast elements and to a heat exchanger obtained from the method.

Heat exchangers are known which are manufactured from die-cast elements whose number can vary according to the heating power levels that the heat exchanger must reach.

In its minimum configuration, a heat exchanger with die-cast elements is provided by a die-cast element that is crossed by a duct in which the fluid with which heat exchange is to be performed flows.

In conventional heat exchangers, such duct is provided by a plurality of first metallic tubular elements, having a rectilinear shape, which are inserted in the die-cast element so as to be parallel to each other, and by a plurality of second metallic tubular elements, having a curvilinear shape, which are external with respect to the die-cast element and are welded to the first metallic elements at their ends, so as to provide a continuous duct that passes repeatedly through the die-cast element.

Generally, the method for manufacturing a conventional heat exchanger with die-cast elements provides for the manufacture of the individual die-cast element by means of a step of die-casting in a die in which multiple cores, adapted to define the passage holes of the first tubular elements, are inserted.

Once die-casting has been achieved, such cores are removed and the first tubular elements are inserted in their place and then connected to each other by means of the second tubular elements and are fixed to them by welding.

Patent document GB-2047587-A describes an exemplary method for manufacturing a heat exchanger according to the preamble of claim 1 and a heat exchanger manufactured by said exemplary method.

These conventional heat exchangers with die-cast elements are not devoid of drawbacks, which include the fact that since the duct is crossed by a pressurized fluid which sometimes is also corrosive, the welding beads that are present between one duct portion and the other do not ensure a correct hydraulic seal of the duct.

Moreover, another drawback of conventional heat exchangers resides in that they have a low thermal efficiency with respect to the ideal one, since the duct has portions which are external to the die-cast element which not only do not contribute to the exchange of heat but also cause dissipation of the heat.

The aim of the present invention is to provide a method for manufacturing a heat exchanger with die-cast elements that allows to obtain heat exchangers that solve and overcome, respectively, the drawbacks and limitations of the background art.

Within this aim, an object of the present invention is to provide a manufacturing method that is economically competitive with respect to the one used in the background art.

This aim and these and other objects that will become better apparent hereinafter are achieved by a method for manufacturing a heat exchanger with die-cast elements according to claim 1.

Moreover, this aim and these and other objects which will become better apparent hereinafter are achieved by a heat exchanger according to claim 7.

Further characteristics and advantages of the present invention will become better apparent from the description of a preferred but not exclusive embodiment of a heat exchanger and of a method for manufacturing a heat exchanger with die-cast elements, according to the invention, illustrated by way of non-limiting example in the accompanying drawings, wherein:

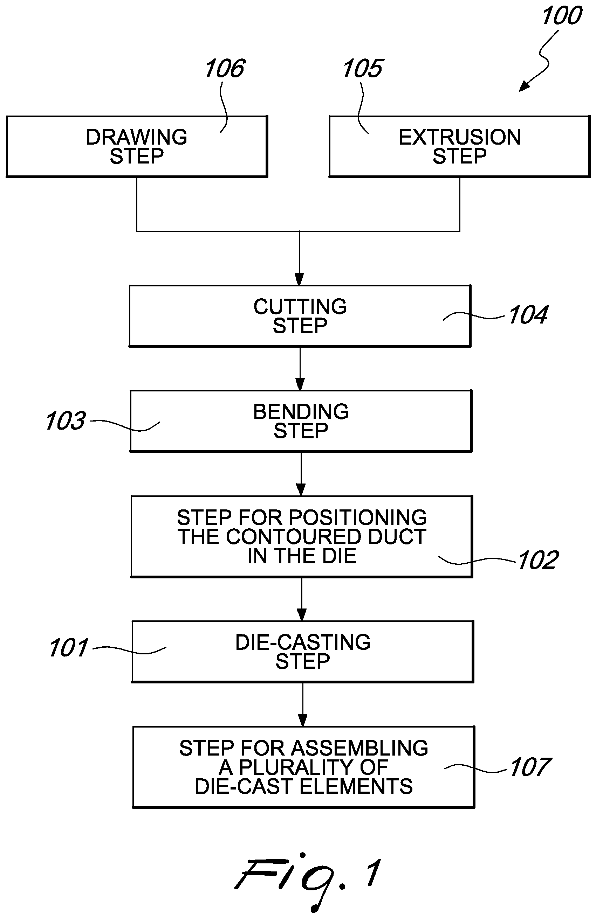

Figure 1 is a block diagram of the method for manufacturing a heat exchanger with die-cast elements, according to the invention;

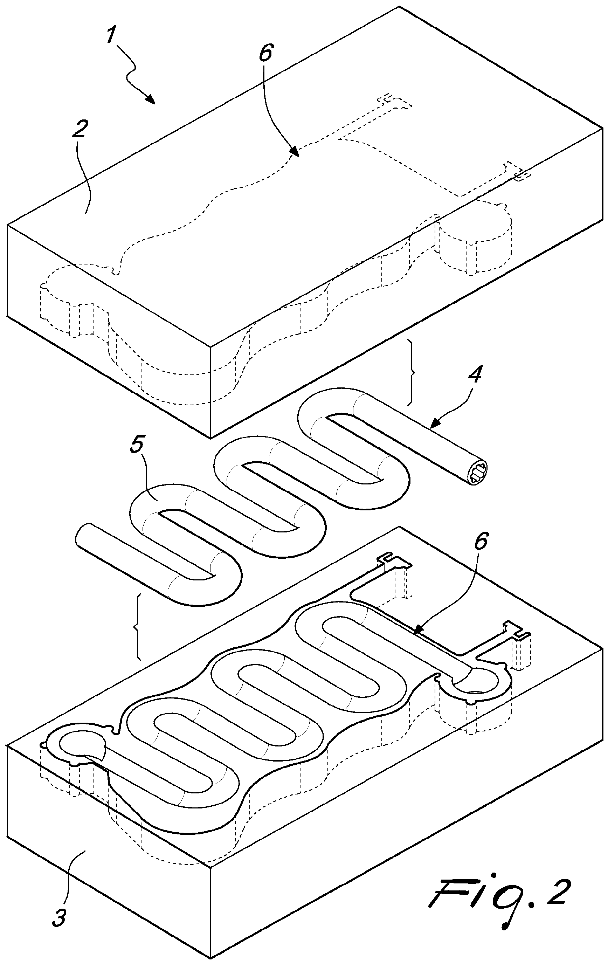

Figure 2 is a schematic exploded view of the die used by the method shown schematically in Figure 1 to manufacture a heat exchanger with die-cast elements, according to the invention.

With reference to the figures, the method for providing a heat exchanger with die-cast elements, generally designated by the reference numeral 100, comprises a step 101 of die-casting at least one element of a heat exchanger by means of at least one die 1 provided by two die parts 2 and 3, respectively an upper one and a lower one.

In greater detail, the two die parts 2 and 3 define the form 6 in which die-casting occurs and in which, according to the invention, at least one contoured duct 4 is placed by means of an adapted positioning step 102 performed prior to the die-casting step.

More precisely, the contoured duct 4 is obtained by means of a bending step 103, preceded by a cutting step 104, of a metallic tube 5 made of aluminum, which is obtained by means of a step of extrusion 105 or drawing 106.

In this manner, the contoured duct 4 is accommodated completely inside the die-cast element and is provided before performing die-casting, so as to not require additional working for completion performed after the die-casting step.

More precisely, the use of aluminum both to provide the metallic tube 5, which can have inner fins to increase the heat exchange surface, and for the die-casting step 101 entails particular solutions in the design of the die and during the die-casting step 101.

First of all, the two die parts 2 and 3 must have a plurality of alternating casting connections to the metallic tube 5, since the molten material under pressure must not strike it directly, in order to avoid denting, deforming or melting it.

Moreover, in order to facilitate the grip of the molten material it is possible to heat the metallic tube 5 to approximately 80-100 °C.

If necessary, the metallic tube 5 can be cooled by means of the internal circulation of liquid (nitrogen, water, oil, etc.).

After obtaining the die-cast element which, depending on the heating power required to the heat exchanger can be a right, left or intermediate element, one proceeds with the step 107 of assembly of a plurality of die-cast elements whose number is variable according to the design specifications of the desired power levels.

In this manner it is possible to provide a heat exchanger that comprises a plurality of die-cast elements which are associated with each other, or at least one die-cast element, each having internally at least one contoured duct 4 provided by a single metallic tube 5.

In practice it has been found that the method for providing a heat exchanger with die-cast elements, according to the present invention, fully achieves the intended aim and objects, since it allows to obtain heat exchangers obtained from die-cast elements that accommodate inside them contoured ducts which have no welds, so as to ensure a perfect hydraulic seal.

Another advantage of the method according to the present invention resides in that it is economically competitive if compared with the background art, since once the die-casting step has been performed the contoured duct requires no further completion work.

The method for manufacturing a heat exchanger with die-cast elements and the heat exchanger that can be manufactured with it, thus conceived, are susceptible of numerous modifications and variations, all of which are within the scope of the appended claims.

All the details may further be replaced with other technically equivalent elements.

In practice, the materials used, so long as they are compatible with the specific use, as well as the contingent shapes and dimensions, may be any according to requirements and to the state of the art.

This application claims the priority of the disclosures in Italian Patent Application No. MI2010A001804.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method (100) for manufacturing a heat exchanger with die-cast elements, the method comprising:
- a die-casting step (101) for die-casting at least one element of a heat exchanger by means of at least one die (1) provided by two die parts (2,3) defining a form (6) in which die-casting occurs, and
- a positioning step (102) for positioning at least one contoured duct (4) completely inside said form (6) of said die (1), performed prior to said die-casting step (101) wherein said at least one contoured duct (4) is provided by a metallic tube (5),
**characterized by** the step of cooling said metallic tube (5) by means of an internal circulation of a liquid.

2. The method (100) according to claim 1, **characterized in that** it comprises an extrusion step (105) for extrusion of the metal tube (5), said extrusion step (105) being performed prior to said positioning step (102).

3. The method (100) according to claim 1, **characterized in that** it comprises a drawing step (106) for drawing a metal tube (5), said drawing step (106) being performed prior to said positioning step (102).

4. The method (100) according to claim 2 or 3, **characterized in that** it comprises a cutting step (104) for cutting said extruded or drawn metal tube (5), said cutting step (104) being performed after said extrusion step (105) or after said drawing step (106) and prior to said positioning step (102).

5. The method (100) according to claim 4, **characterized in that** it comprises a bending step (103) for bending a cut metal tube (5), said bending step (103) being performed after said cutting step (104) and prior to said positioning step (102).

6. The method (100) according to claims 4 and 5, **characterized in that** it comprises an assembling step (107) for assembling a plurality of die-cast elements obtained from said die-casting step (101) to provide said heat exchanger.

7. A heat exchanger, comprising at least one die-cast element, **characterized in that** said heat exchanger is manufactured by the method of claim 1.

8. The heat exchanger according to claim 7, **characterized in that** it comprises a plurality of die-cast elements, which are mutually associated and have inside them at least one contoured duct (4) provided by said single metal tube (5).

9. The heat exchanger according to one or more of claims 7 and 8, **characterized in that** said metal tube (5) is made of aluminum.

## Patentansprüche

1. Ein Verfahren (100) zur Herstellung eines Wärmetauschers mit Druckgusselementen, das Folgendes umfasst:
- einen Druckgießschritt (101) zum Druckgießen mindestens eines Elements eines Wärmetauschers mit Hilfe mindestens eines Werkzeugs (1) das aus zwei Werkzeugteilen (2, 3) besteht, die eine Form (6) bestimmen, in welcher das Druckgießen stattfindet, und
- einen Positionierschritt (102) zum Positionieren mindestens einer konturierten Leitung (4) vollständig in der Form (6) des Werkzeugs (1), der vor dem Druckgussschritt (101) durchgeführt wird, wobei die mindestens eine konturierte Leitung (4) in einem Metallrohr (5) besteht,
**gekennzeichnet durch** den Schritt des Kühlens des Metallrohrs (5) mit Hilfe einer Innenzirkulation einer Flüssigkeit.

2. Das Verfahren (100) gemäß Anspruch 1, **dadurch gekennzeichnet, dass** es einen Extrusionsschritt (105) zur Extrusion des Metallrohrs (5) umfasst, wobei der Extrusionsschritt (105) vor dem Positionierschritt (102) durchgeführt wird.

3. Das Verfahren (100) gemäß Anspruch 1, **dadurch gekennzeichnet, dass** es einen Ziehschritt (106) zum Ziehen eines Metallrohrs (5) umfasst, wobei der Ziehschritt (106) vor dem Positionierschritt (102) durchgeführt wird.

4. Das Verfahren (100) gemäß Anspruch 2 oder 3, **dadurch gekennzeichnet, dass** es einen Schneideschritt (104) zum Schneiden des extrudierten oder gezogenen Metallrohrs (5) umfasst, wobei der Schneideschritt (104) nach dem Extrusionsschritt (105) oder nach dem Ziehschritt (106) und vor dem Positionierschritt (102) durchgeführt wird.

5. Das Verfahren (100) gemäß Anspruch 4, **dadurch gekennzeichnet, dass** es einen Biegeschritt (103) zum Biegen eines geschnittenen Metallrohrs (5) umfasst, wobei der Biegeschritt (103) nach dem Schneideschritt (104) und vor dem Positionierschritt (102) durchgeführt wird.

6. Das Verfahren (100) gemäß den Ansprüchen 4 und 5, **dadurch gekennzeichnet, dass** es einen Zusammenbauschritt (107) zum Zusammenbauen einer Vielzahl druckgegossener Elemente umfasst, die in dem Druckgussschritt (101) hergestellt wurden, um den Wärmetauscher zu bauen.

7. Ein Wärmetauscher, der mindestens ein druckgegossenes Element umfasst, **dadurch gekennzeichnet, dass** der Wärmetauscher mit dem Verfahren gemäß Anspruch 1 hergestellt wird.

8. Der Wärmetauscher gemäß Anspruch 7, **dadurch gekennzeichnet, dass** er eine Vielzahl druckgegossener Elemente umfasst, die miteinander verbunden sind und in ihrem Inneren mindestens eine konturierte Leitung (4) haben, die aus dem einzelnen Metallrohr (5) besteht.

9. Der Wärmetauscher gemäß einem oder mehreren der Ansprüche 7 und 8, **dadurch gekennzeichnet, dass** das Metallrohr (5) aus Aluminium besteht.

## Revendications

1. Procédé (100) de fabrication d'un échangeur de chaleur avec des éléments moulés sous pression, le procédé comprenant :
- une étape de moulage sous pression (101) pour mouler sous pression au moins un élément d'un échangeur de chaleur au moyen d'au moins un moule (1) constitué de deux parties de moule (2, 3) définissant une forme (6) dans laquelle se produit le moulage sous pression, et
- une étape de positionnement (102) pour positionner au moins une conduite façonnée (4) complètement à l'intérieur de ladite forme (6) dudit moule (1), exécutée avant ladite étape de moulage sous pression (101), dans laquelle ladite au moins une conduite façonnée (4) est constituée d'un tube métallique (5),
**caractérisé par** l'étape de refroidissement dudit tube métallique (5) ay moyen d'une circulation interne d'un liquide.

2. Procédé (100) selon la revendication 1, **caractérisé en ce qu'**il comprend une étape d'extrusion (105) pour l'extrusion du tube métallique (5), ladite étape d'extrusion (105) étant exécutée avant ladite étape de positionnement (102).

3. Procédé (100) selon la revendication 1, **caractérisé en ce qu'**il comprend une étape d'étirage (106) pour étirer un tube métallique (5), ladite étape d'étirage (106) étant exécutée avant ladite étape de positionnement (102).

4. Procédé (100) selon la revendication 2 ou 3, **caractérisé en ce qu'**il comprend une étape de coupe (104) pour couper ledit tube métallique extrudé ou étiré (5), ladite étape de coupe (104) étant exécutée après ladite étape d'extrusion (105) ou après ladite étape d'étirage (106) et avant ladite étape de positionnement (102).

5. Procédé (100) selon la revendication 4, **caractérisé en ce qu'**il comprend une étape de cintrage (103) pour cintrer un tube métallique coupé (5), ladite étape de cintrage (103) étant exécutée après ladite étape de coupe (104) et avant ladite étape de positionnement (102).

6. Procédé (100) selon les revendications 4 et 5, **caractérisé en ce qu'**il comprend une étape d'assemblage (107) pour assembler une pluralité d'éléments moulés sous pression obtenus à partir de ladite étape de moulage sous pression (101) pour fournir ledit échangeur de chaleur.

7. Échangeur de chaleur comprenant au moins un élément moulé sous pression, **caractérisé en ce que** ledit échangeur de chaleur est fabriqué au moyen du procédé de la revendication 1.

8. Échangeur de chaleur selon la revendication 7, **caractérisé en ce qu'**il comprend une pluralité d'éléments moulés sous pression, qui sont associés mutuellement et à l'intérieur desquels se trouve au moins une conduite façonnée (4) constituée par ledit tube métallique simple (5).

9. Échangeur de chaleur selon l'une ou plusieurs des revendications 7 et 8, **caractérisé en ce que** ledit tube métallique (5) est en aluminium.
